(19) Europäisches Patentamt
European Patent Office
Office européen des brevets

(11) **EP 2 693 221 B1**

(12) **EUROPEAN PATENT SPECIFICATION**

(45) Date of publication and mention
of the grant of the patent:
**26.04.2017 Bulletin 2017/17**

(51) Int Cl.:
**G01P 3/487** *(2006.01)*     **G01P 3/488** *(2006.01)*
**G01P 21/02** *(2006.01)*     **G01P 3/489** *(2006.01)*

(21) Application number: **12178415.1**

(22) Date of filing: **30.07.2012**

(54) **Magnetic Sensor Arrangement**

Magnetsensor-Anordnung

Arrangement de capteur magnétique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.02.2014 Bulletin 2014/06**

(73) Proprietor: **NXP B.V.**
**5656 AG Eindhoven (NL)**

(72) Inventors:
• **Riemschneider, Karl-Ragmar**
**5656AG Eindhoven (DE)**

• **Krey, Martin**
**5656 AG Eindoven (DE)**
• **Jegenhorst, Niels**
**5656 AG Eindhoven (DE)**

(74) Representative: **Terblanche, Candice Jane**
**NXP SEMICONDUCTORS**
**Intellectual Property Group**
**Abbey House**
**25 Clarendon Road**
**Redhill, Surrey RH1 1QZ (GB)**

(56) References cited:
**EP-A2- 0 323 696          WO-A1-2011/126462**
**US-A1- 2004 186 680     US-A1- 2012 032 669**

**Description**

FIELD OF THE INVENTION

The invention relates to a magnetic sensor arrangement.
Further, the invention relates to a sensor system comprising the magnetic sensor arrangement.
Beyond this, the invention relates to a method of determining an operating state of a magnetic sensor.
Further, the invention relates to self-diagnosis of automotive sensor systems, in particular antilock sensor systems.Moreover, the invention relates to a computer-readable medium.
Furthermore, the invention relates to a program element.

BACKGROUND OF THE INVENTION

Magnetic sensors are widely used in several mechatronic applications. Magnetic rotational speed sensors may be used as wheel rotational speed sensors in automobiles where they are also called angular speed sensors or wheel speed ensors or ABS sensors. This information may be used for electronically controlled brake systems (like the antilock braking system ABS), drive stability systems, and other functionalities of the automotive electronics. Common sensor encoder systems comprise a sensor and an encoder wheel. The encoder wheel is moved, by wheel movement, along an axis of the sensor being magnetically sensitive. This provides a magnetic field being modulated with alternating field components. The alternating components are generated due to the encoder movement and act as varying field components (direction of the vectorial field strength and/or absolute value of the field strength) in the area of the sensor.
Common sensor encoder systems use an encoder wheel made of steel with ferromagnetic characteristics, being referred to as passive encoders. The modulation can be done using a spatial change of flux due to a rotation of the passive encoder wheel which can be configured as a gear wheel (having teeth, cogs or waves) or a hole wheel. A permanent magnet being arranged at the sensor provides the field to be modulated by the encoder.
Other common sensor encoder systems use an active encoder wheel which has, instead of ferromagnetic forms (teeth, holes, etc.), a plurality of permanent magnetic poles with changing polarity (or at least significant magnetization change) for the modulation at the sensor. Typically, also these systems comprise a permanent magnet in the region of the sensor which is used to generate a constant magnetic field for the sensor to define an operating point by a steady field component. This permanent magnet may be called bias magnet. The sensor operating point may be located in a region where the non-linear behavior is reduced.
The teeth or poles pass, during the rotational encoder movement, near the sensor with a fixed airgap (with a narrow tolerance region). The tolerances refer to the distances and angles of the magnetically sensitive area from the sensor to the encoder. By setting the tolerances, it may be ensured that the relevant field components remain in defined areas, in which there exist reduced non-linear relations and a sufficient distance of the alternating field component to be sensed in respect to distortions and noise.
In several common systems, a magnetic sensor is used based on the effects of the anisotropic magneto-resistive effect (AMR). Such sensors may be arranged in the form of a bridge circuit with magneto-resistive resistors being integrated on a chip. A resistor having an elongated rectangular shape with magneto-resistive characteristics may have a sensitivity characteristic line running negative-quadratic, if the modulating field component is applied on the long side of the resistor. This effect may be explained due to the current displacement effects. Well known are techniques to aim a partial linearization in a limited operation area, called barber pole structure. Few of the AMR sensors nonlinearity effects and the partial linearization are in detail explained from U. Dibbern. (Dibbern, U. Magnetoresitive Sensors, Chap. 9 in Sensors - A Comprehensive Survey, Ed. Göpel,W., Hesse,J., Zemel,N. Vol. 5 Magnetic Sensors. Vol.-Ed. Boll,R., Overshott,J.,VCH, Weinheim 1989.).
The rotational speed sensors may be monitored during operation, for instance by monitoring the operating point or quiescent point of magnetic sensor encoder system. Monitoring sensors may be useful for ensuring and improving the reliability of the systems.
Rotational speed sensors are using several physical effects. Nowadays, sensors on basis of the Hall effect or the anisotropic magneto-resistive effect (AMR) are used; in the future also sensors on basis of the giant magneto-resistive effect (GMR) or Tunnel magneto-resistive effect (TMR) may be used. All sensor systems as well as the physical effects of sensors are characterized by non-linear relations.
DE 196 50 935 A1 discloses a system, wherein, in order to transmit data supplied by a rotational speed sensor in the form of an alternating signal along with additional data via a signal line, a sequence of electrical pulses of a given duration is derived from the alternating signal. The intervals or interpulse periods of said sequence contain information on rotational speed. Additional data is transmitted in the interpulse periods, wherein transmission of additional data is synchronized by the individual rotating signal sensor pulses. The method may be employed for active sensors, whereby the sensor pulses and the additional data are transmitted in the form of electric signals. During standstill, when no sensor pulses occur, transmission of additional data is triggered by auxiliary synchronization pulses.

There exist also further methods in the art for transmitting the result of the primary sensor information and/or other additional information to a superior electronic control unit.

DE 10 2006 036 270 A1 discloses a method for determining the mapping error in a wheel speed sensing system composed of a magnetic encoder which rotates with the wheel and which is magnetically coupled to a wheel speed sensor across an air gap which has a specific length, in which the wheel speed sensor can sense both the wheel speed and the average magnetic field strength in the air gap and output them electronically in a defined fashion, and an electronic control unit in which, during a specific driving state of the motor vehicle, the wheel speed sensor measures the average magnetic field strength in the air gap, after which the actual pole pitch mapping error of the encoder affecting the data of the wheel speed sensor is determined from the average magnetic field strength in the magnetic air gap; the evaluation of a reference characteristic curve which is stored electronically and gives the relationship between the standardized air gap length and the mapping error and the standardized field strength.

US 2012/032669 A1 describes a magnetic device which produces a sinusoidal signal for determination of angular position in a rotary machine. The device creates a variable magnetic field according to an angle of rotation of a multi-polar magnetic ring having a thickness e. A magnetic senor is placed in this magnetic field and generates the sinusoidal signal. Between the magnetic sensor and the magnetic ring an air gap is given with a distance E from the magnetic ring. The ratio of the radial thickness of the magnetic ring and the air gap distance e/E is between 0.4 and 2.3. According to the air gap E and the radial thickness e the total harmonic distortion of the signal produced by the magnetic sensor are measured for indicating whether the signal of the magnetic sensor corresponds to the sinusoidal shape or the signal of the sensor is distorted due to an inappropriate mounting position of the sensor related to the magnetic ring, i.e. resulting in a non-optimum air gap.

US 2004/186680 A1 describes a method for analyzing a physical system having a rotating element. The method comprises receiving a signal containing rotation speed information for the rotating element, determining a time sequence comprising time values for the rotating element at substantially equal angle increments, applying a first interpolation filter to the time sequence for generating a modified time sequence, and receiving a digital data signal. The digital data signal comprises a plurality of samples and data for the rotating element at substantially equal angle increments. A digital interpolation filter is applied to the digital data signal for generating a modified data signal. The modified data signal is resampled by using the modified time sequence to generate an angel domain data signal. Such angle domain data signal comprises data signal values at substantially equal angle increments and is usable to analyze the physical system.

EP 0 323 696 A2 describes a tracking and resampling method for monitoring the performance of a rotating shaft machine. The method comprises (i) generating performance data based on a uniform phase angle basis by measuring devices being coupled to a rotating machine. The performance data are sampled on a known time basis for producing a time bases continuous waveform, and (ii) resampling the time based continuous waveform to uniform phase angles of the shaft of the rotating machine for producing uniform phase angle based data samples.

The information of a simple air gap as a one-dimensional value may often be not sufficient for the description of problematic influences. Thus, the common systems and methods might be not appropriate for a diagnosis of the sensor or sensor system operation with distinct non-linearity or ambiguity in this context. In these areas, systematic encoder mapping failures occur due to distorted (often highly distorted) sensor output signals. Distorted signals does not only occur due to invalid air gap dimensions but also due to tilting or dumping of the sensor systems, due to magnetization failures, due to inhomogeneities or defects of the permanent magnet, due to defective encoder wheels or due to a combination of these.

Thus, there may be need for a sensor system which may be monitored for ensuring the reliability of the system, wherein the monitoring takes into account the above mentioned issues.

OBJECT AND SUMMARY OF THE INVENTION

It is an object of the invention to provide a magnetic sensor arrangement and a method for providing an efficient way of determining information being indicative for a magnetic sensor of the system for ensuring the reliability of the magnetic sensor system.

In order to achieve the object defined above, a magnetic sensor arrangement, a sensor system comprising the magnetic sensor arrangement, a determination method for signal distortion evaluation, a computer-readable medium and a program element according to the independent claims are provided.

According to an exemplary embodiment of the invention, a magnetic sensor arrangement for determining an operating state of a magnetic sensor is provided. The magnetic sensor arrangement comprises a magnetic sensor being adapted to provide an output voltage being modulated by a movement of an encoder component, the encoder component providing a periodic changing magnetic field being generated due to a relative movement of the encoder component in relation to the magnetic sensor arrangement, and a sensor control unit being coupled to the magnetic sensor. The sensor control unit is adapted to receive the output voltage signal of the magnetic sensor, wherein the output voltage signal is a function of time, to change the reference quantity (or reference value) from time to rotational angle by mapping the output voltage signal to a converted signal being a function of rotational angle such that spectral signal power portions (or spectral signal power components) of the converted signal are associated with orders of the encoder rotational speed, to determine a first signal power being indicative for a first portion of orders of the encoder rotational speed (also called encoder orders), to determine a second signal power being indicative for a second portion of encoder orders, to determine a ratio of the first signal power and the second signal power, the ratio being indicative for a signal distortion of the output voltage signal, and to determine the operating state of the magnetic sensor based on the determined ratio.

According to a further exemplary embodiment, a sensor system is provided. The sensor system comprises a magnet sensor arrangement having the above described features and an encoder component.

According to a further exemplary embodiment, a method of determining an operating state of a magnetic sensor is provided. The method comprises receiving an output voltage signal of a magnetic sensor, the magnetic sensor being adapted to provide an output voltage being modulated by a movement of an encoder component, the encoder component providing a periodic changing magnetic field being generated due to a relative movement of the encoder component in relation to the magnetic sensor arrangement, wherein the output voltage signal is a function of time, changing the reference quantity from time to rotational angle by mapping the output voltage signal to a converted signal being a function of rotational angle such that spectral signal power portions of the converted signal are associated with orders of the encoder rotational speed, determining a first signal power being indicative for a first portion of encoder orders, determining a second signal power being indicative for a second portion of encoder orders, determining a ratio of the first signal power and the second signal power, the ratio being indicative for a signal distortion of the output voltage signal, and determining the operating state of the magnetic sensor based on the determined ratio.

According to a further exemplary embodiment, a computer-readable medium is provided, in which a computer program of determining an operating state of a magnetic sensor is stored, which computer program, when being executed by a processor, is adapted to carry out or control a method having the above mentioned features.

According to still another exemplary embodiment, a program element (for instance a software routine, in source code or in executable code) of determining an operating state of a magnetic sensor is provided, which program element, when being executed by a processor, is adapted to carry out or control a method having the above mentioned features.

Determining an operating state of a magnetic sensor, which may be performed according to embodiments of the invention, can be realized by a computer program that is by software, or by using one or more special electronic optimization circuits, that is in hardware, or in hybrid form, that is by means of software components and hardware components.

The operating state and thus the reliability of a magnetic sensor, like a rotational speed sensor, in particular an ABS sensor system, may be quite important. For the analysis of the reliability, risk analysis may be performed. One possibility of a risk analysis is the failure mode and effects analysis (FMEA) which uses a risk priority number as a product of rating numbers. The rating numbers refer to the probability of occurrence of failures, to the criticality (importance or severity) of failures and to the probability of detection of failures.

Based on this, the present invention intends to solve the issue of determining the reliability of the magnetic sensor arrangement by improving the probability of detection of failures (e.g., improved and precocious detection). The present invention is based on the idea to detect failures before the digital sensor output is negatively influenced by the failures. A digital form of the sensor output may be preferred for the transmission reliability but the analysis of the digital form may be limited in the following control unit. Thus, the possibility of an early failure warning may be reduced. A reduced signal quality (amplitude, distortion, noise, etc.) might be not or reduced detectable. Therefore, additional information would be needed, which may be determined directly at or in the sensor prior to the digital transmission. However, the need for additional information may increase the cost and the effort of a sensor system.

Often, in addition to quality assurance, a problem-solving approach of self-diagnosis is used in all steps of development, trial and manufacturing. A self-diagnosis (build-in-selftest, BIST) of the sensor can be carried out during manufacturing, first start-up, assembling and activation and intermittently during operation. The latter can be often discarded during normal operation. A framework condition for the herein described invention may be that the diagnosis function should be implemented such that the function may preferably be carried out continuously and accompanying in the normal sensor or vehicle operation.

The present invention is based on the idea that many failures affect the sensor and the sensor encoder system by generating a distinct and noticeable signal distortion. The output voltages of error-free systems normally have little distorted signals having a well approximated sinusoidal shape. Failures or errors may in particular occur due to invalid operating points of the systems in relation to a number of parameters. These parameters refer to the spatial location, the magnetic excitation, electrical quantities of the components, deviations due to temperature, etc. Signal distortions may be explained based on the non-linear relations which are present more or less depending on the parameters. In the optimum operating point of the sensor, the non-linearties have the weakest effect. Often there is a simple assumption of linear relations useful. In contrast, the non-linear effects are stronger in case of faulty deviations of the optimum operating point. Thus, the extent of signal distortions may provide a good indicator for operating point deviations.

The herein described sensor arrangement provides a signal processing implementing a diagnosis function for determining a signal distortion quantitatively. Hereby, the sensor output signal may be analyzed, in one embodiment, only the sensor output signal may be needed. This may be advantageous as the use of other or additional measured values may be costly. Furthermore, the monitoring and analysis or evaluation of the output signal may be performed during normal operation.

In the special case of constant rotational speed and ideal encoder, there are stationary conditions. In this case, the ideal encoder and optimal operating point generate a sinusoidal output signal with constant frequency and few non-linear influences. The frequency may be referred as base frequency and is proportional to the constant rotational speed.

If one quit the optimal operating point, the non-linear correlations are increased or the SNR (signal to noise ratio) is declined. In the first case, harmonics (second harmonic and higher) exist, the signal power or voltage portion of which can be calculated as total harmonic distortion (THD) or klirr factor. Several calculation specification exist, for instance a ratio of the signal power of the higher harmonics (second and higher) or to the total signal power may be calculated. The spectral fractionation of the harmonic frequencies is possible with an intermediate step of discrete or fast fourier transformation (DFT/FFT) or Goerzel method. A higher klirr factor or THD value is present in case of a strong distortion of the sensor signal. Also, a bad SNR or too less level control of the analog-to-digital converter has the same result as stronger distortions. The THD value or klirr factor is thus an advantageous indicator for the operating state of the sensor encoder system. However, normally, the assumption of a constant rotational speed and an ideal encoder is not valid.

In a real sensor, the rotational speed is not constant. In contrast, the sensor may sense very different and changeable rotational speeds. The base frequencies of the sensor signal may be typically between 0Hz (measurable starting from 1 Hz) and 2500Hz in an ABS system. For the task of a rotational speed sensor, it is characteristic that the sensor signal is not stationary. Due to unknown and variable frequencies, a frequency spectrum generated by DFT/FFT cannot be used as basis. The position of the base frequency and the harmonics is unknown and cannot be separated from each other in an easy way. In the case of fast happening changes of the rotational speed, there are no distinct frequency lines in the spectrum. The spectral lines of the harmonics would be propagated and spread over the spectral range.

To have stationary signals for the determination of the operating state instead of in-stationary signals due to the non-ideal encoder, the herein described arrangement uses a change of the reference quantity from time or frequency. This change of the reference quantity may be performed by mapping the in-stationary signal as a function of time to a stationary signal as a function of a different reference quantity. This mapping is possible for rotational speed sensors if the sensor output voltage is considered as a function of rotational angle. By having an angle related stationary signal, the commonly used signal processing is possible, such as harmonic analysis.

By changing the reference quantity from time to rotation angle, in the cyclic rotation, the term "frequency" changes to "order". In the context of the invention, order 1 is associated with one whole encoder circulation. The encoder passing the sensor generates a signal with a significant higher order. This higher order corresponds to the division of the encoder, i.e., the number of teeth, holes or periodically changing poles at the perimeter. This higher order is called in the following the "encoder order". The encoder order in ABS systems typically has values between 30 and 100, in particular between 40 and 60.

The aforementioned first harmonic frequency (base frequency) of the sensor signal is replaced, due to the change of the reference quantity, by the first harmonic encoder order. The second harmonic encoder order has the double order and so on. Harmonic order may be shortened in the following by "harmonic" as also used for harmonic frequencies.

Thus, the present arrangement is based on the idea that a high signal portion of the encoder order, i.e., the first harmonic, is an indicator for a good approximation of the ideal or optimum operating point. Reverse, a high portion of the higher harmonics of the encoder order may be an indicator for a deviation from the operating point.

The term "magnetic sensor" may denote any kind of sensor being able to determine or sense signals being associated with a magnetic field, in this case a periodic or alternating magnetic field having an alternating signal. In one embodiment, the magnetic sensors may be magneto-resistive sensors.

In the following, further exemplary embodiments of the magnetic sensor arrangement will be explained. However, these embodiments also apply to the sensor system, the determination method, to the program element and to the computer-readable medium.

The encoder orders of the first portion of encoder orders may correspond to the encoder order having an encoder order number corresponding to the encoder division.

According to this embodiment, the first signal power is determined based on spectral signal power portions of the encoder order, wherein the encoder order corresponds to the encoder division.

The encoder orders of the second portion of encoder orders may correspond to predefined multiple of the encoder order having an encoder order number corresponding to the encoder division or wherein the encoder orders of the second portion of encoder orders correspond to all encoder orders.

The second signal power may correspond to the sum of signal powers of some multiple of the encoder order, i.e., some harmonics except of the first harmonic, or may correspond to the total signal power.

The first signal power may correspond to the overall signal power reduced by the signal power of the first encoder order, and the second signal power may correspond the overall signal power.

In this embodiment, the ratio may be determined by the sum of all harmonics except of the first harmonic and the sum of all harmonics.

The sensor control unit may comprise a comparator for sensing the encoder period based on the sensor output voltage and a digital counter for counting the duration of the encoder period.

The counter may be used for determining the duration of the encoder period by counting for instance the time between passing of one tooth and passing of the next tooth. This may be done by monitoring zero crossings. The comparator may sense the encoder period and transmit the information to the counter.

The sensor control unit may be further adapted to determine a momentary value of the duration of the encoder period based on an output signal of the counter and based on the output voltage signal.

The momentary value may be determined by a clock-counting time measurement between two and/or three zero crossings of the sensor output voltage signal.

The sensor control unit may be adapted to determine at least one point of sampling based on the predetermined momentary value of the duration of the encoder period and to sample the output voltage signal to the at least one determined point of sampling.

If only one sampling point is determined, the determination of a momentary value may be repeated and a new sampling point may be determined. After a predefined number of sampling steps and corresponding determined sampling values, the processing of the sampling values may continue.

In another embodiment, if only one sampling point is determined, a part of the further processing of the sampling values may continue, and then the determination of a momentary value may be repeated and a new sampling point may be determined. After a predefined number of sampling steps and corresponding determined sampling values, the rest of the processing of the sampling values may continue.

To avoid a space and cost consuming arrangement, the described arrangement may derive the time points for sampling directly from the sensor signal. It may be assumed that the duration of a previous encoder period corresponds to the duration of the encoder period of the sampling. The signal processing in the sensor control unit may first determine an encoder period and calculate based on this duration the time in the next period or the times in the next period. The following periods may be checked whether there was an exception with a high angular acceleration. In such a case, the corresponding sampling values may be ignored. Small angular accelerations may be ignored as the influence on the results is small.

A small number of harmonics (for instance 10) of the encoder order may be sufficient, so that only a limited number of sampling values (for instance 32, 64, 128) may be taken per period. In this case, DFT may be preferred for signal processing.

The sampling may be performed equidistantly in the reference quantity of the rotational angle of the encoder.

The sampling may be performed in particular in an equidistant distance in the encoder rotational angle.

Determining the first signal power and the second signal power may comprise multiplying the sampling values with complex harmonic coefficients, and accumulating the multiplied values for a selected time period.

The complex harmonic coefficients may be equidistant sampling values of the sine and cosine functions of predefined multiple of the encoder rotational angle. In one embodiment, the multiple are considered which corresponds to simple or multiple encoder divisions. The results of the multiplying may be accumulated for all sampling values of a selected time period.

Per harmonic, two accumulators may be used which include the real and imaginary part of the harmonic of the signal. After one or more completely sampled and accumulated encoder periods, the power of each harmonics may be determined from the two accumulator values by squaring.

Determining the ratio of the first signal power and the second signal power corresponds to determining a ratio of subtotals of the results of the accumulation.

The ratio may be determined by using subtotals of the squares or absolute values of the results of the accumulation.

The above mentioned steps of determining a momentary value (A), sampling (B), multiplying (C), accumulating (D), determining a ratio (E) and determining the operating state (F) may be carried out sequentially. The steps A to E may be carried out in parallel, however, may be offset by one step. If one of the steps could not be finished, results of previous steps may be used instead of the current step results.

In step C, the coefficient values may be extracted from a look-up table. In step F, a calculated and/or tabulated square root of the calculated ratio value may be used instead of the calculated ratio value. The accumulation in step D may be carried block by block or continuously floating.

The sensor control unit may be adapted to transmit the determined operating state to a superior system control unit (ECU, electronic control unit).

The operating state may be transmitted in the form of additional information in a protocol. The protocol may be generated in step F during determining the operating state.

The sensor control unit may be integrated as circuit part of the sensor.

For instance, the sensor control unit may be part of the sensor ASIC. Further, the sensor control unit may operate as a finite state machine.

It should be noted that the herein described signal processing and corresponding mathematical operations may be modified. In any case, a change of the reference quantity should be performed.

The aspects defined above and further aspects of the invention are apparent from the examples of embodiment to be described hereinafter and are explained with reference to these examples of embodiment.

BRIEF DESCRIPTION OF THE DRAWINGS

The invention will be described in more detail hereinafter with reference to examples of embodiment but to which the invention is not limited.

Fig. 1 illustrates a schematic diagram of the ABS sensor function.
Fig. 2 illustrates a schematic diagram of the ABS sensor function having varying rotational speed.
Fig. 3 illustrates a model representation of the non-linearity of the sensor function.
Fig. 4 illustrates a two-dimensional model representation of the active non-linearities.
Fig. 5a-5f illustrate examples of the distortion in the time and frequency domain for constant rotational speed.
Fig. 6a and 6b illustrate a representation of the change of the reference quantity.
Fig. 7a and 7b illustrate an embodiment for cost saving subsampling.
Fig. 8a and 8b illustrate a further embodiment for cost saving subsampling.
Fig. 9a-9c illustrate a further embodiment for cost saving subsampling.
Fig. 10a-10c illustrate an embodiment for fast sampling.
Fig. 11a and 11b illustrate an embodiment for varying sampling.
Fig. 12 illustrates results for the method depending on the air gap.
Fig. 13 illustrates results for the method depending on the air gap and dumping.
Fig. 14 illustrates a further embodiment for cost saving subsampling.

DESCRIPTION OF EMBODIMENTS

The illustration in the drawing is schematically. In different drawings, similar or identical elements are provided with the same reference signs.

For the method according to the invention, it may be assumed, based on experiments, simulations and theoretical analysis, that the non-linear movements in a system are not significantly influenced when changing the reference quantity. With the introduced term "order", it may be said: a high signal portion of the encoder order, i.e., the first harmonic, is an indicator for a good approximation of the ideal or optimum operating point. Reverse, a high portion of the higher harmonics of the encoder order may be an indicator for a deviation from the operating point. This statement may be clarified as follows: a fictive-ideal mechanic-magnetic-electrical system of a rotational speed sensor would have linear characteristics. It would generate a sinusoidal signal without steady component and with sufficient amplitude and negligible noise. This signal would have the encoder order. Only in a limited operating region around a carefully adjusted operating point, the ideal signal would be approximated in a sufficient way.

A smaller or middle deviation from the operating point in one or more parameters would first lead to a distortion, and/or noise components or to insufficient amplitude, respectively, and/or hysteresis effects, and/or offset components with limitations in the signal, and/or other influences to the signal.

The first three phenomena and indirectly also the other ones lead to increased signal components the order of which is different from the encoder order. These different signal components can dominate in an extreme case such that unstable or systematically wrong outputs may occur. The latter may lead to unlikely frequency doubling. Due to noise, there are portions having any - harmonic or non-harmonic - orders within the limits of the bandwidth of the system or the occurring noise. The number of the affected orders may be limited by the number of digital samples per encoder period. Offset values, which limit the signals or lead into non-linear regions of the characteristic diagram, also take effect in distortion. Rarely and far beyond the operating point, hysteresis effects (also called flipping) may occur which are hardly controllable, for instance by loss of a component of the magnetic field. This may be signal distorting or random like low-frequency noise.

These considerations militate for the validity of the basic assumption. Only when drifting further away from the operating point, an essential failure of the signal may occur, when no harmonics may be determined anymore. In this case, the function of the diagnosis may and should be associated with a superior system, comparable to the loss of a connection to the sensor.

One problem aspect may be the effort due to limited resources for the diagnosis function in the sensor signal processing. The signal pre-processing in modern sensor systems may be carrier in/at the sensor system using integrated circuits (mixed signal ASIC). In the signal processing part of the sensor, there is available typically very little energy and little chip space. Additional energy might not be supplied to the sensor due to established and fixed protocols. Additional lines may also be ruled out. For a diagnosis function to be brought into the sensor, there may be available only a small part of the energy being supplied to the sensor system, for instance 1mW. Further, due to the usable chip space and the costs, only minimal resources may be used for the diagnosis. Thus, the clock frequency and the digital circuit complexity should be kept small.

Solutions, being typically used for signal and order analysis (like using signal processors, using high resolution Fourier analysis and storing many sampling values) may be ruled out due to the needed effort.

Technical solutions coming from the order analysis may not be used in the sensor ASIC. Further frame work conditions in the sensor are against the simple transformation of the known methods and the technical solutions of the order analysis. The order analysis is used until now mostly for complex machines or world-scale plants, where the analysis uses an external triggering of the sampling points of time by an incremental encoder rotating along, which is mounted at the rotating shaft in addition, or uses a digital order tracking by signal processing.

The external triggering might not be used for normal operation of the ABS sensor as an external incremental encoder is not available.

The method of digital order tracking first samples the signal timely equidistantly. Then, a variable and adaptive sampling rate transcription follows. For getting the target sampling rate, the rotational speed information is supplied, for instance from an incremental encoder or tachometer system. By using a rotation speed channel being independent from the time-referenced signal, a new, rotational angle or rotational speed referenced signal may be generated from the time-referenced signal by interpolation. Therefore, interpolating low-pass filtering may be carried out based on digital computations. This may require highly expensive signal processing, which may typically be performed block by block by high-performance signal processors or offline using software on computers. The broad frequency range of the ABS sensor would aggregatively require filtering with many interpolation coefficients, which is hardly realizable with low effort. The needed equipment is not possible for normal rotational speed sensors. The objective of the invention would be violated by these conditions. However, usage of such a system could be possible for testing benches.

Summarizing, the adoption of the methods of signal processing and the solutions of the vibration sensing technique of mechanical engineering is not possible for order analysis. The analogy of the order analysis is limited to an adoption of the terms, the known technical solutions cannot be used for the rotational speed sensor system.

The herein described invention suggests deriving directly the time basis for sampling from the sensor signal itself.

A partial solution of the invention lies in that the aforementioned external triggering of the sampling may be replaced by "self-triggering" emanating from the sensor signal itself. Thus, a sampling frequency running along the sensor signal may be possible. For realising the self-triggering, it may be used that the values of the angular acceleration being practically possible can be reduced normally in an easy way. This is a consequence of the energetic limitations of the rotating component with mass (inertia of the wheel). This is further limited for the whole vehicle in normal operation as huge masses, maximal driving and braking power, small steer angles, stable rolling friction of the wheels etc. In contrast, there are only few short exceptional cases, which can be ignored for diagnosis purposes. These cases refer to short moments of wheel blocking high slip, initial states, etc.

The invention may derive the points of time of the sampling of the signal, the sampling running along, directly from the sensor signal. Due to the limited angle acceleration, it can be assumed that there are only few exceptions where the time period of one encoder period prior to the sampling does not correspond to the time period of one encoder period of the sampling.

The method and system according to the invention takes advantage of this according to one embodiment. The signal processing first determines one encoder period and calculates, based on this determined encoder period, the point of time in the next period or the points of time for following signal samplings in the next periods. These following or subsequent period(s) can be checked after termination if there was an exception with high angle acceleration or the like. For this purpose, the relative deviation of the time period of both periods may be calculated. For the case that this deviation exceeds an error value, the sampling value(s) will be discarded for the diagnosis. For the remaining - normally not discarded - sampling values, it may be guaranteed that the sampling points of time comprise only a small and certainly limited error (jitter). This has the same effect as a small error of the sampling value for the exact operating point. During the further analysis of the harmonics, there may be also a small error in the result. It can be shown that this is negligible. With angle accelerations getting smaller, the error may disappear. In addition, discarding the sampling values may be sensed and may contribute to the further diagnosis function which follows.

One solution of the invention can avoid the complex signal processing being used until now. For the analysis of the harmonics, a fixed number of sampling values may be taken from the encoder period at points of time, which are equidistantly in relation to an angle. Further, some calculations might be performed, which will be described later. If there is not enough processing power or energy available, or if the encoder period is too short due to a higher angle acceleration, there may be two solutions:

1. The sampling values of one period may be cached and may be processed in the next period or during more than one later period.
2. The sampling values for the analysis of one period may be taken from more than one period and may be processed continuously, thus the signal may be sub-sampled.

The requirements for both solutions are similar or uniform signal forms for all periods. Based on the angle reference system, this may be fulfilled for the duration of the period.

For the first solution, periods following the sampling are not analysed until the calculation of the analysis of the block taken is finished. There exists sensing gaps, which should be distributed periodically and coprime to the encoder division so that all encoder periods can be sensed. For the second solution, more than one or many periods can be analysed together.

The signal processing theory teaches that a signal loses its uniqueness if it's sub-sampled. This is valid for the time domain as well as for the frequency domain, and also for rotational angle and orders. Only by taking an appropriate band, the uniqueness would be restorable. For the harmonics analysis, the uniqueness is not required if the sub-sampling refers also to the coefficients of the harmonics. If multiple periods are to be analysed together, the sub-sampling may be used preferably for counteracting resource limitations.

According to further embodiments, the method steps may be combined. A small number of harmonics (for instance 10) of the encoder order may be sufficient, so that only a limited number of sampling values (for instance 32, 64, 128) may be taken per period. In this case, DFT may be preferred for signal processing. The sine and cosine coefficients may be stored in a table. Due to the cyclic and symmetric developing of these functions, a storage efficient common lookup table may be used. The table can be used for all harmonics due to different index calculations. The appropriate sampling value will be multiplied with both coefficients and the results will be adding accumulated. This operation will be repeated for each harmonics being part of the analysis.

For each participating harmonic, two accumulators are needed which include the real and imaginary part of the harmonic of the signal. After one or more completely sampled and accumulated encoder periods, the power of each harmonics may be determined from the two accumulator values by squaring. In a last step, the sum of the powers of the higher harmonics is divided by the power of the first harmonic. Alternatively, other ratios having similar meaning may be formed, for instance the sum of the powers of the higher participating harmonics may be divided by the sum of all participating harmonics, or the sum of the powers of the higher harmonics may be divided by the total power, or the total power minus the power of the first harmonic may be divided by the total power. Instead of using the power, also the signal amplitude of the corresponding harmonic may be used.

For calculation of the THD or klirr factor referring to voltage ratios, root calculations may be needed. By using a table, this may be simplified. If it is desired that few steps of the results are to be output (typically 8 steps) a binary search for the appropriate interval may be preferred.

A very simple possibility for an evaluation is a comparison of the sizes of the values of the harmonics. These values could be adjusted by scaling factors.

In one embodiment representing a basis embodiment, the sensor arrangement may carry out the following method. First, the number n of sampling values for one period and the number h of harmonics included in the method may be determined. This may be done experimentally.

The complex coefficients of the harmonics may be calculated before as sine and cosine values and stored in a look up table (LUT) with n entries with identical angle distance. The angle distance divides the circulation or revolution around the unit circle in n parts for the first harmonic. It doubles for the second harmonic and so on.

The LUT comprises complex values and has a dimension of n x h. The index of the sampling values is i with i=1, ..., n. The index of the harmonics is j with j=1,...,h. One entry of the LUT may be therefore:

$$LUT(i,j) = \left\{ \cos\left(\frac{i \cdot 2 \cdot \pi \cdot j}{n}\right), \sin\left(\frac{i \cdot 2 \cdot \pi \cdot j}{n}\right) \right\}$$

For each harmonics, n complex values are stored. For the first harmonic, values of one unit circle are stored, for the second harmonics values of two circulations of the unit circle are stored and so on.

In step (A) of the method, the duration of one encoder period is determined.

In step (B) of the method, the sensor signal is sampled at a calculated time in a following encoder period. The time is determined by multiplication of the current index i of the sampling value with the current time distance of the samplings. The current time distance corresponds to a division of the value of the duration of step (A) by the selected number n of sampling values.

In step (C), the sampling value of step (B) is multiplied with the complex coefficient (sine and cosine values of the LUT entry with the index pair i and j) for each harmonic j of all h included harmonics.

In step (D), the multiplication results of step (C) are accumulated for each harmonic j of the h included harmonics separated into real and imaginary part.

In step (E), the signal powers on the basis of the accumulated real and imaginary parts of step (D) are calculated for each included harmonic and the ratio of the sum of powers of the higher harmonics to the power of the first harmonic is determined.

In step (F), the (operating) state of the sensor arrangement is determined as a result of step (E) and transmitted to a superior system.

The steps A to D may be repeated until a whole period is sensed. For this, the fixed number n of sampling values is chosen. A typical value may be for example n=64. Typically, the sampling values for one period are not taken from one encoder period but from multiple encoder periods.

The sampling in step B can be done based on a calculation under consideration of step A in an angle related equidistantly form. After termination of step D, the steps E and F only follow once.

The steps A to F can be combined in different ways. In the following, some examples will be explained.

The steps A and B can be realized by a counter of time cycles (timer). Therefore, a determination of zero-crossings may be used, which is often available in a sensor circuit, and which can be used for counting the length of one section of the encoder division (distance between tooth edges or pole changes) with a counting clock. The counting clock can be the system clock or any pre-divided system clock. The result may be multiplied with the index of the desired sampling value and divided by the total number of desired samplings. The latter may be very simple if the total number is chosen as a power of 2. Multiplication and division may be timely changed. This result is the sampling point of time in counting steps of the same counting clock starting from a zero-crossing.

Step B may be implemented as sub-sampling for reducing the required processing power: Only one value between two zero-crossings is taken, steps C and D are only carried out for this value. Prior to the next sampling, the duration of the encoder period is determined again as the duration could deviate in the meantime. Only after a fixed number of steps A to D and thus combined analyzed periods, steps E and F follow.

In another embodiment, step B may be divided into multiple sub-steps $B_i$, in which the whole sampling of the period section between two or three zero-crossings may be performed. All intended values between two or three zero-crossings are taken. Following to the sub-steps $B_i$, the sub-steps $C_i$ and $D_i$ follow, in which the steps C and D are divided. After each zero-crossing, the steps E and F are carried out and for each encoder period, an own result can be determined. This advantage may be used when sufficient processing power is available, for instance in a specialized chip design.

In other embodiment, also step A may take place by using fast periodic sampling. This may provide to determine the zero-crossings of the sensor signal and thus also the encoder period. Hence, step B may also take place with fast sampling.

In another embodiment, sampling in step B may take place at uniformly distributed pseudo-random points of time. The uniformly distribution of the pseudo-random points of time extends up to a maximum time, which corresponds to the measured duration of the period from step A. The sampling values might need to be sorted in their correct timely order immediately or subsequently. Sorting can be done based on the original algorithm of step B. For avoiding storage for the sorting, the multiplication of step C can be done immediately with the respective coefficients suitable for the sampling point of time and subsequently the non-sorted accumulation of step D may follow. It may be advantageous in this embodiment that sampling can be done at varying positions at the encoder wheel. Thus, periodic signal degradation due to damaged positions at the encoder wheel or untrue-running of the encoder wheel may be suppressed, if desired. For a further diagnosis of the cause of failure, it may be useful to switch between pseudo-random sampling and sequential sampling and to compare the respective results.

In another embodiment, the selection of the sampling values in step B may be dine based in a further table comprising pre-calculated time values instead of using a multiplying computation.

In another embodiment, step B is carried out by selection and taking of a sampling value from a fast continuously running analog-digital-conversion, the sampling value being timely appropriate as good as possible, instead of activation of one single analog-digital-conversion at the calculated point of time. The sampling values are taken from many fast sampling values, wherein the sampling values should have the smallest deviation from the calculated points of time. There may remain a failure up to half sampling distance of the fast running sampling. For reducing the failure, a digital filter may combine multiple of the continuously occurring sampling values. Then, a reduction may occur instead of a simple selection. Further, it may be advantageous to use a linear interpolation for two sampling values or a digital filter when using multiple interpolations over multiple interpolation points.

In another embodiment, the coefficients table (LUT) may be reduced in its extent by using addressing, wherein the symmetries being present for the coefficients are used. For instance, the periodicities of the trigonometric functions can be used for reducing the memory requirements of the LUT. The arrangement within the LUT can consider the sequential or pseudo-random sampling.

According to a further embodiment, step B can be amended by a determination of the encoder period during the running sampling. After taking one sampling value or multiple sampling values, it can be checked whether the duration of the period being the basis for the sampling points of time deviates. If there is a significant deviation, the sampling values may be discarded. Single sampling values would then be set aside, which can be acceptable for diagnosis purposes. If the tooth frequency is re-sensed after sampling, a correction of the corresponding coefficients may be carried out also for step C. This may be limited for lookup table storing of the coordinates due to the resolution of the table and can be improved by interpolation.

In another embodiment, the ratio value in step E can be evaluated by using a root function, for instance for determining a quantity directly, which approximates the known THD or klirr factor for a constant rotational speed. For minimizing the effort, the root function can be stored in a LUT in few steps.

In another embodiment, not only the ratio value of step E but also further indicators can be considered for step F. Such indicators may comprise for instance the peak-to-peak voltage difference or amplitude values of the sensor signal, the signal gain chosen by a control or the measure offset voltage of the sensor signal. These indicators can be formed by the difference signal of the measuring bridge or by the half bridge signals. Also the temperature being measured directly in the sensor may be used as additional indicator. In addition to momentary value or average value of the indicators, also the gradient of these values may be an indicator by itself. The latter may be significant if there is a changing offset voltage of the sensor signal. These additional indicators can be combined with a starting table with the results of step E. It may be advantageous in this embodiment that the diagnosis can be improved as the output to the superior system (for instance ABS control system) can be done based on two or more indicator values. Thus, the estimation of the operating point and the diagnosis of the state of the sensor system may be improved and ensured.

In another embodiment, steps A to D can be carried out for a fixed number of sampling values. This number forms a sensing block. Each sensing block can form a result by using the steps E and F. The blocks can overlap up to a maximum offset of one sampling value.

In another embodiment, the accumulation (step D) can be continuously gliding such that the accumulation value being determined until now and the current accumulation value can be weighted combined to one value. In the next step, this combined value becomes the accumulation value being determined until now.

In another embodiment, an adjustment of the number range may be advantageous for steps C, D and E due to the predefined frame conditions and for the required circuit costs. For the multiplications and additions to be performed, it can be determined beforehand which number ranges or bit widths may be required for the results. Thus, a dynamic adjustment of the number ranges to the available bit width may be realized. Thus, number range overflow may be avoided for the calculation operations without the need to implement oversized number ranges in hardware by way of precaution.

In another embodiment, step E may be amended by a table for implementing the root function. As starting value for this table, the quotient being formed from the absolute values of the harmonics may be used. As the result of the root function may deliver a value less than 1, it may be desired to scale the result values of the root function already in the table, in view of a reference point implementation. For increasing the resolution of the table whilst reducing the memory requirements, it may be appropriate to divide the table into multiple single tables having different quantization steps. Thus, the non-linear root function may be simulated. Alternatively, the root function may be realized by using algorithms only using simple arithmetic functions like addition, subtraction and bitwise shifting. When using the result of the quotient of the harmonics directly for determination of the operating state, the root function may be omitted.

According to another embodiment, the estimation of the base frequency to be performed in step A can be done based on the zero-crossings of the sensor signal. This embodiment is advantageous in view of the effort as the output signal of the sensor system is already output synchronized with the zero-crossings and thus a zero-crossing detection is already provided. The zero-crossing detection can be realized for instance by one or multiple comparators wherein, when reaching a predefined threshold of the sensor signal, a time measuring can be started or terminated.

Another embodiment is the direct sampling and digital conversion of the sensor signal with subsequent digital evaluation of the zero-crossings or the sign. A processing of the digital signal, like filtering or offset correction, can be performed prior to the evaluation.

According to another embodiment, the estimation of the base frequency of the sensor signal can be realized by an analog or digital phase locked loop (PLL). Such estimation may be advantageous for periodic changing zero-crossings. The same may be the case for higher noise influence to the zero-crossings.

According to another embodiment, step C may be amended by an evaluation of the sub-harmonics of the sensor signal. For this, the sampling values are multiplied in addition with coefficients corresponding to the half or n-fold integer division of the encoder order. According to this embodiment, effects like an untrue running or unbalanced manufactured or damaged encoder wheel may be detected.

In another embodiment, only specific subsets of sampling values are evaluated. For instance, an alternating use of the sampling values may be possible. First, sampling values with even indices are evaluated and the sampling values with odd indices are evaluated. Also, cyclic variation of the number of sampling values is possible, for instance the variation of the period distance between two sampling values for the sub-sampling and the alternating omission of periods prior to taken again sampling values. The latter may be advantageous for evaluating multiple encoder periods in combination, for instance for considering different encoder divisions without adjustment of the sensor diagnosis function. As an advantageous embodiment, also further sensor signals may be evaluated in view of deviations between each other. Thus, in a bridge circuit the half bridge signals may be evaluated in addition to the bridge difference signal.

According to another embodiment, the number of the steps B and/or steps C and/or steps D may be adjusted in one encoder period to the length of the period. The length can be derived statically from the value of step A or dynamically by using priority presetting for the method steps.

According to another embodiment, steps E and F can be done after a huge amount of encoder periods on basis of a presettable time and/or a presettable number of accumulated values of encoder periods.

The method can be implemented as a digital circuit on basis of a finite state machine having a state transition model. The method can also partially or fully be implemented by using a microcontroller. In both cases, at least in the ABS sensor, insertion in the signal processing ASIC may be advantageous.

For a higher processing power of the diagnosis, it may be advantageous to perform processing with parallel working functional units being organized as pipeline. The parallel work can be used for decreasing the required clock for reducing the required energy.

Further embodiments will now be described in the context of the figures.

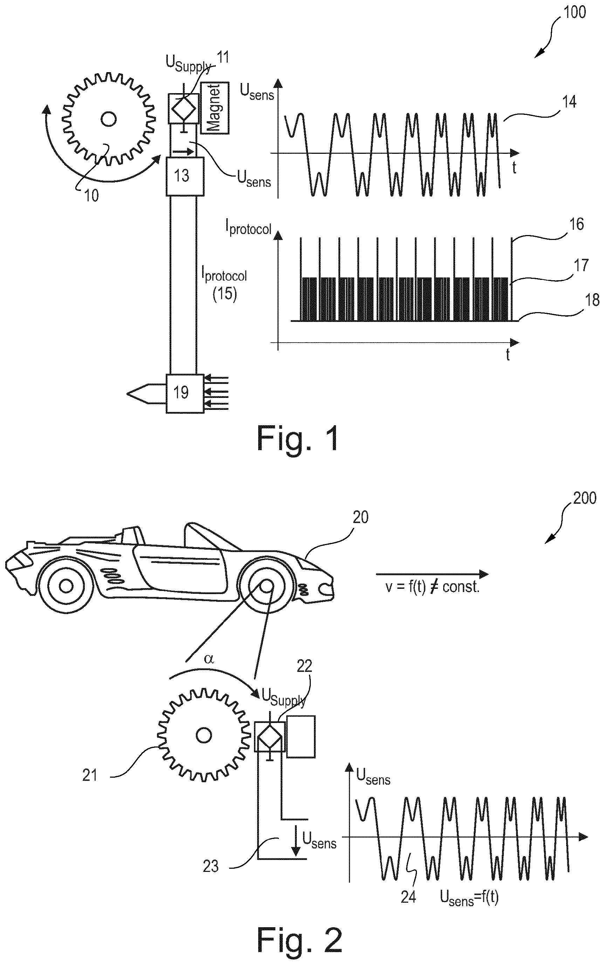

Fig. 1 illustrates a schematic diagram of the total function of the ABS sensor as an overview. The system components as shown herein correspond to known components. In the region of the wheels of the automotive or vehicle, an encoder wheel 10 is mounted such that a sensor element 11 or multiple sensor elements provide a sensor output voltage 14 when interacting. Often, four sensor elements are interacting in a bridge circuit and together with a permanent magnet 12. The sensor output voltage 14 is modulated by the encoder movement and more or less distorted. The voltage can be evaluated in the sensor ASIC 13, and an output protocol 15 can be supplied to a superior electronic control unit 19. The electronic control unit provides an influence to automotive systems, like brake and motor functions. In some embodiments, the electronic control unit also uses further supplied information. The output protocol 15 here is only exemplary provided for different current levels. It may be differed between the current level of the basis function 16 for transmitting the speed pulse, the current level for the additional information 17 being manchester coded and the current level 18 for transmitting the energy to the sensor. The representation is only exemplary. Other functions, components and protocols are possible, as long as at least one sensor output voltage 14 is available.

Fig. 2 illustrates a part of the schematic diagram of Fig. 1. In addition, it is shown that the vehicle velocity v 20 is not constant. As a result, the angular velocity $\alpha$ of the encoder wheel 21 is not constant. The sensor 22 delivers a sensor output voltage $U_{sens}$ 23 which comprises a varying time period (or duration) of the encoder period, independent from the distortion, while the kind of distortion is extensively similar. This is shown in the function diagram 24.

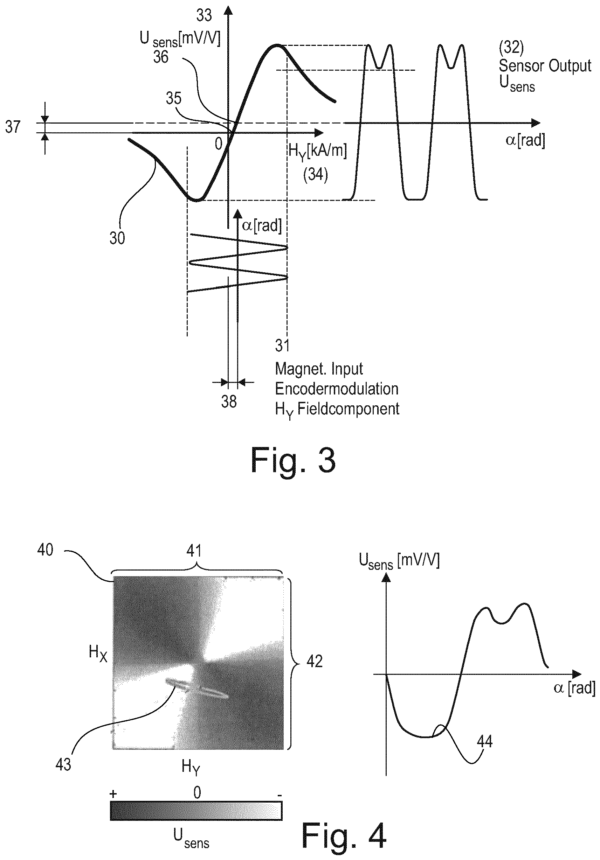

Fig. 3 illustrates a simplified representation of the non-linearity of the sensor function. The course of the characteristic curve 30 is commonly known for AMR sensors. It comprises significant non-linearity, which can only be linearized in a central region. A magnetic stimulation 31 is only assumed in an active component Hy 34, in the simplified model. The sensor converts the stimulation to a voltage $U_{sens}$ 33. The voltage is directly proportional to the bridge supply voltage in a bridge circuit and is normalized to that with the unit mV/V.

The stimulation can be considered as being sine-shaped 31 in the simplified model that means that the non-linearity of the magnetic system (encoder sensor relation) is neglected.

In this model, three failure cases are explained: the first failure occurs by an electric voltage offset 37, for instance due to the non-ideal bridge adjustment. A similar effect has an amplifier offset. The second failure corresponds to a magnetic offset 38, for instance due to non-equipollent field components at the magneto-resistive resistances. Due to both offset failures, the origin of the failure-free characteristic curve 35 is shifted to another origin 36. The third failure corresponds to an overmodulation of the linear region. These failures result all together in a significant distortion of the sensor output signal 32. In the Figure, the failures are shown in light, still unproblematic occurrence. When becoming stronger, the sensor function may be affected. For the diagnosis, a detection of the distortion may be desired.

Fig. 4 illustrates a refined model representation compared to Fig. 3. Here, the magnetic system is involved. Therefore, three field components, Hx, Hy, and Hz, are active in the space. The components can be reduced to two components Hx and Hy when the coordinate system is transformed into the two sensible directions of the sensor. The third component corresponds to the insensible direction of the sensor Hz and can be neglected. The non-linear characteristic diagram of the sensor 40 can be illustrated as gray level diagram. The sensor output voltage is coded in gray levels and is dependent on both dimensions, components Hx 42 and Hy 41. Due to the non-linearities of the magnetic system consisting of encoder, sensor and permanent magnet, both components define an orbital 43 around a virtual central operating point when the encoder wheel is moving.

This model considers the interacting non-linearities of the mechanic-magnetic sensor encoder system and the magnetic-electric sensor system. The model may also define complex influenced sensor voltage curves 44. The model has been examined theoretically and metrologically and is improved in view of the simple sensor model of Fig. 3. The models of the example of Fig. 3 and 4 should only be considered for explanation reasons.

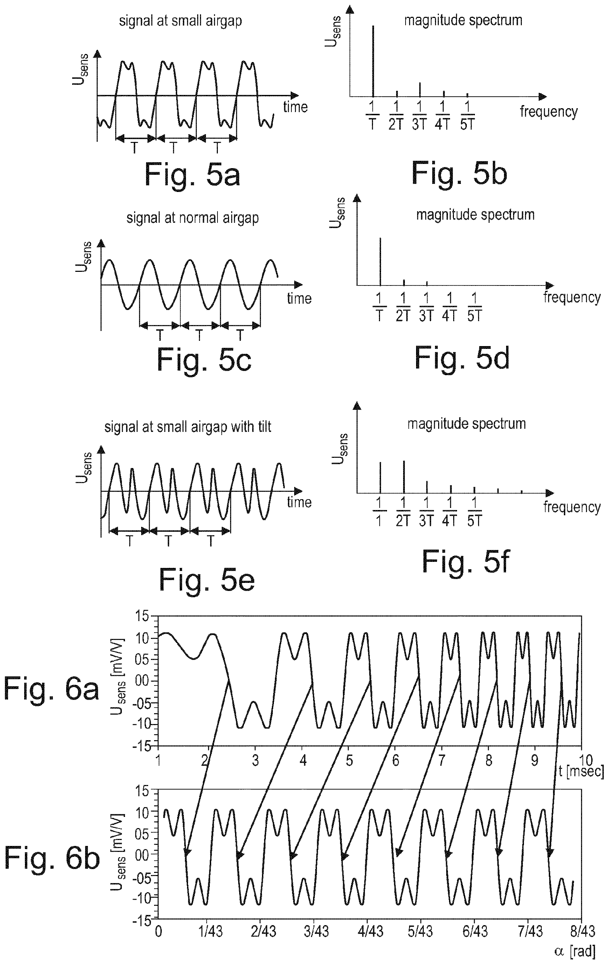

**Fig. 5** illustrates examples of the signal distortion for constant rotational speed. It should be noted that the assumption of constant rotational speed is only valid for the sensor as an exceptional case. Signal distortion is illustrated in the time and frequency domain (shown right and left).

In the center of Fig. 5c, the signal for nearly optimal installation processing is shown. In Fig. 5d, the first harmonic is clearly dominating in the frequency domain.

At the top, a slightly incorrect installation position is shown, where the sensor is mounted near to the encoder. The first harmonic in Fig. 5b is still dominating, and the signal in Fig. 5a overmodulates the sensor slightly. Due to the non-linear sensor function, droppings occur being unexpected for normal overmodulation instead of peak values remaining temporary constant. The non-linearity causes a characteristic of the third harmonic. Other harmonics are also amplified.

Below, a drastic incorrect installation position is shown, the sensor is mounted near the encoder and tilted by a smaller angle in addition. The signal in Fig. 5e is significant distorted. A common signal processing which evaluates zero-crossings for instance would, undetected, report a double output frequency to the superior electronic control unit. Here, a need for a diagnosis may be recognized. In the frequency domain of Fig. 5f, the first harmonic is not dominating, and it is even below the second harmonic. Other harmonics are also amplified. The below representation shows the results of the complex counteracting of multiple non-linear systems, for instance of the magnetic and the electric system.

**Fig. 6** illustrates a schematic diagram of the change of the reference quantity from time to rotational angle according to the invention. Thereby, the distorted signal in Fig. 6a, which is a function of time, is transferred to a distorted signal in Fig. 6b being a function of the rotational angle. The identifiable instationarity in Fig. 6a is canceled by a mapping, being appropriate calculable, into Fig. 6b, where the stationarity in respect to the rotational angle is valid. Thus, the methods of the signal processing may apply analogously if the base quantity time is replaced by the rotational angle in an appropriate manner. The same is valid for the replacement of the term frequency being derived from time by the term order being derived from rotational angle. The order is reciprocal to the rotational angle, has no unit and has the value 1 for one whole revolution.

It should be considered that only angles being essentially smaller than the whole angle of one encoder rotation corresponds to a signal period. The encoder wheel divides this whole angle in typically 30 to 100 equal parts, from tooth to tooth, from hole to hole, from pole to pole, respectively, etc. The number of parts is referred to as encoder division. As an example, an encoder division of 43 is chosen, as shown on the abscissa in Fig. 6b.

The signal period has to be assigned to an order instead a frequency after reference to the rotational angle. Normally, the order has the same value as the encoder division and is called encoder order.

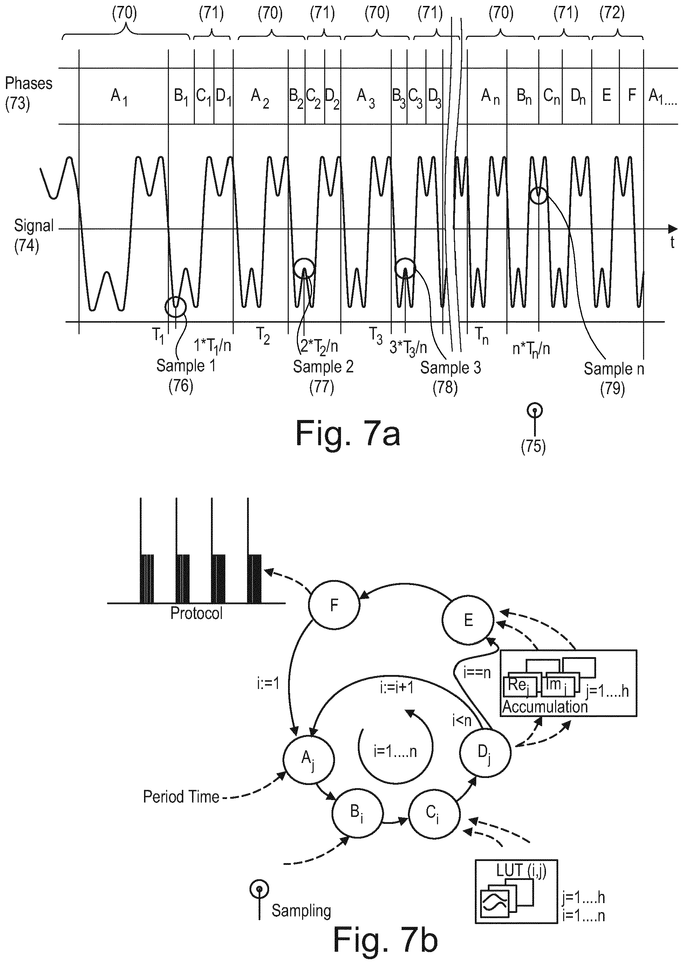

**Fig. 7a** illustrates an example of the method in schematic form. Steps A to F are shown as successive phases 73.

First, the phases A and B take place for sensing 70, then the phases C and D for complex multiplication and accumulation of the harmonics portions 71, at last the phases E and F for ratio forming, evaluation and output 73. The phases A, B, C and D take place in cyclic subsequent sub-steps. Each sub-step has an index i. For each index value of the sensor output signal 74, a current/actual duration of the encoder period $T_i$ is determined in phase A. From the duration $T_i$ and the index, the point of time of the sampling is determined. The sampling is characterized by a circle icon 75. This index value is also valid for the corresponding sampling value in phase B.

For example, from period $T_1$, the point of time for the sampling value 1 is calculated 76, from period $T_2$ the point of time for the sampling value 2 is calculated 77 etc. This is repeated until n sampling values have been determined, which corresponds in this embodiment to a number of 2•n encoder periods. Then, steps E and F follow. The common evaluation of multiple periods by using the sub-sampling can be possible. The angle acceleration has become insignificant in this evaluation time as a change of the period duration from a previous period is determined continuously. The remaining failure originating from the non-precise actuality of this period duration for the change of the reference system can be neglected for a limited value of the angle acceleration. The limitation can be ensured typically due to physical reasons.

**Fig. 7b** illustrates the process of the phases of the method in schematic form. The example is also a state diagram for a circuitry-wise implementation. Phases $A_i$ to $D_i$, as states, are traversed n-fold. Then, phases E and F follow once and the cycle begins again with reset index. Important steps are shown in symbols, like sampling, using the coefficient table (LUT), accumulation and output.

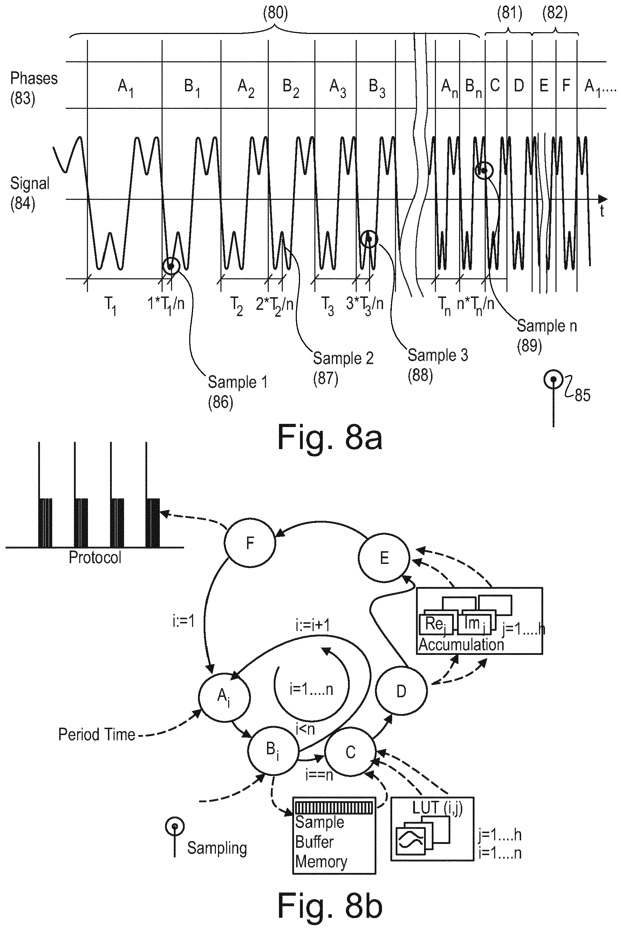

**Fig. 8a** illustrates a further embodiment of the method in schematic form. Steps A to F are shown as successive phases 83. Phases A and B 80, C and D 81 as well as E and F 82 have the same tasks as shown in Fig. 7a. Signal 84 and the sampling symbol 85 also correspond to Fig. 7a. In contrast to Fig. 7a, phases A and B are carried out first cyclic in n indexed sub-steps, then phases C, D, E and F follow.

**Fig. 8b** illustrates as a further example the process of the phases of the method in schematic form. The example is a state diagram for a circuitry-wise implementation. The symbolic representation follows Fig. 7b. However, first all sampling values are sensed in phases A and B and stored in a sample buffer memory and then processed later in following phases. This may be advantageous if steps C and D are combined.

The combination of steps C and D may be required when using a fast Fourier transformation, which may be the case for using a lot of harmonics. It should be noted that this effort might not be practically realizable and might not be necessary according to the invention. Exception may be specific measuring means, like test benches.

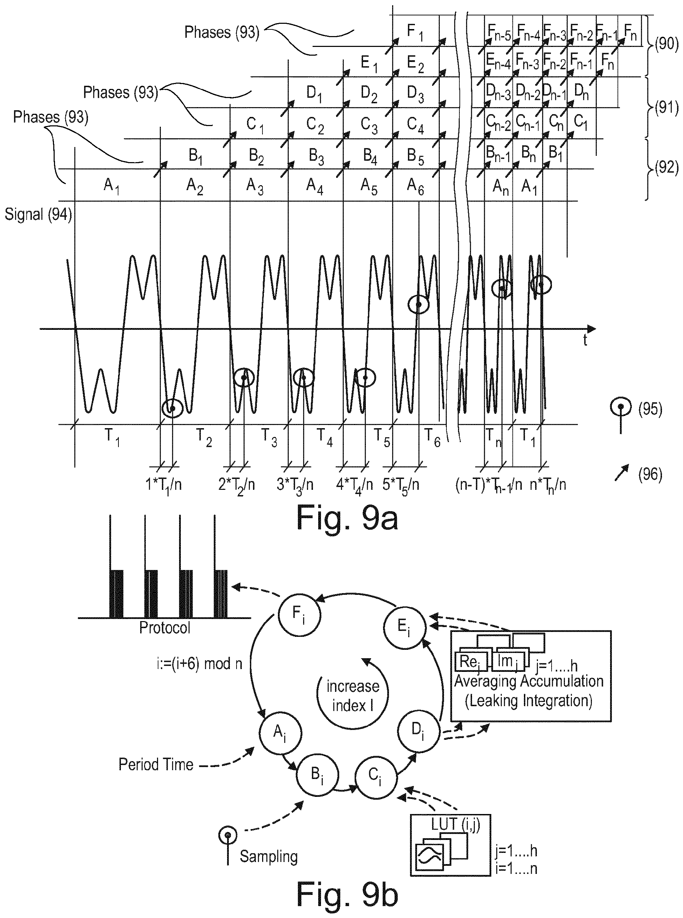

**Fig. 9a** illustrates a further embodiment of the method in schematic form. Steps A to F are represented as phases 93 running successive and in parallel. Phases A and B 90, C and D 91 as well as E and F 92 have the same tasks as shown in Fig. 7a and Fig. 8a. In contrast to these Figures, all phases are divided into sub-steps having an index i. The index i is increased with the encoder phase up to a fixed number n of the evaluated/analyzed sampling values. It can be seen that a complete pipeline structure is used for the parallel processes. The result of phase $A_i$ is used by phase $B_i$ timely successive for sampling 95, while $A_{i+1}$ is already carried out in parallel, etc. Forwarding interim values 97 according to the pipeline principle is continued for steps C to F. The accumulation in phase D can be done advantageously as shifting averaging (leaking integrator) or as ring buffer having a length n or multiple of n.

**Fig. 9b** illustrates a further process of the phases of the method according to Fig. 9a in schematic form. The example is also a partial state diagram of a partial machine for a circuitry-wise implementation. The symbolic representation follows Fig. 7b. Phases $A_i$ to $F_i$, as states, are traversed n-fold, wherein, for each partial machine, n/6 cycles are carried out.

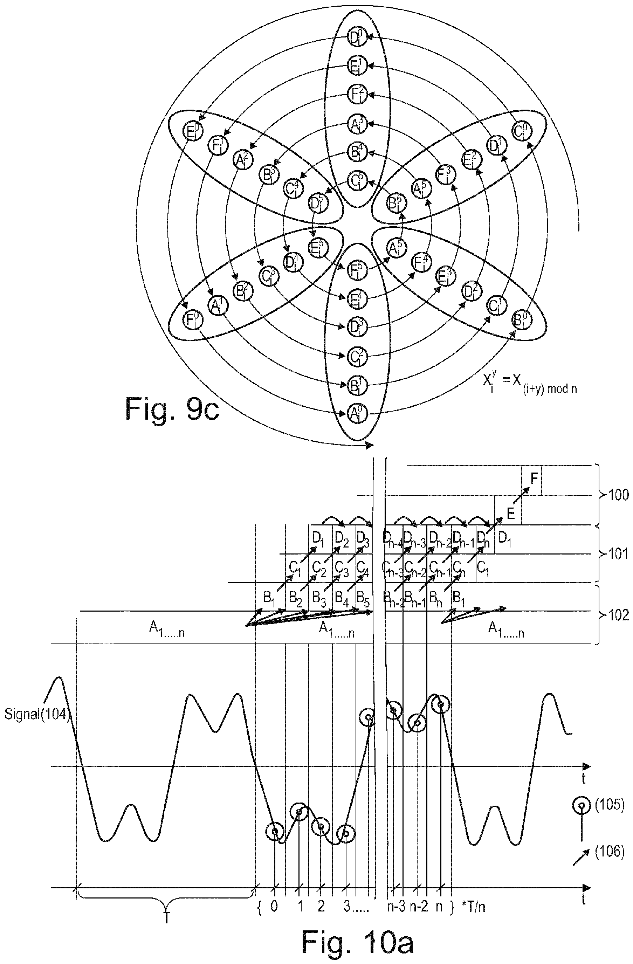

**Fig. 9c** illustrates a summary of the partial machines of Fig. 9b within the parallel interaction caused by the pipeline. States $A_i$, $B_i + 1$, $C_i + 2$, $D_i + 3$, $E_i + 4$ and $F_i + 5$ are combined, respectively, being symbolized by a covering ellipse. The notation $X_i^y$ symbolizes the mentioned continued counting, under consideration of the modulo operation after n steps, respectively.

**Fig. 10a** illustrates a further example of the method in schematic form. Steps A to F are shown as successive, parallel phases 73. Again, functions of sensing 102, complex multiplication and accumulation 101 and evaluation and output 100 are carried out. Sampling is characterized by a circular symbol 105 and forwarding values is characterized by an arrow 106. The pipeline refers only to phases B to D in indexed sub-steps, phases E and F are only processed at the end-index n for the total result. Phase A can be parallel. The example assumes enough time for processing of all sub-steps in one encoder period. This may be possible when having a very small rotational speed and/or when having a sufficient fast optimized realization in the digital circuit implementation.

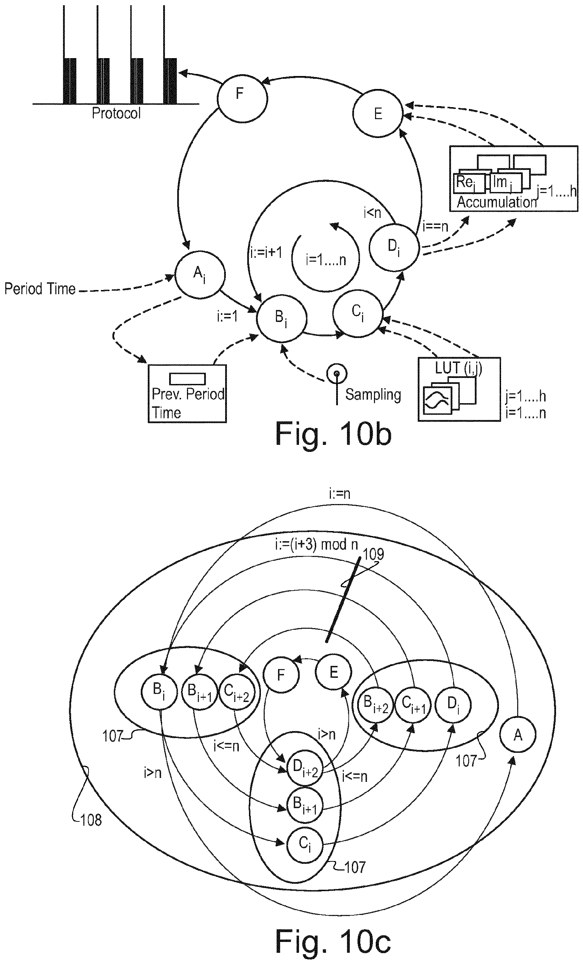

Further, as an additional embodiment, a switching combination of the alternatives according to Fig. 7 and Fig. 10 may be possible such that sub-sampling of the sensor output signal according to Fig. 7 (104) is carried out only when necessary.

**Fig. 10b** illustrates a further example of the process according to Fig. 10a in schematic form. The example is a state diagram of a partial machine for a circuitry-wise implementation. The symbolic representation follows the previous representation. Phase A is carried out first in the cycle. Phases $B_i$ to $D_i$, as states, are traversed n-fold. Then, phases E and F follow once and the cycle begins again.

**Fig. 10c** illustrates a summary of the partial machines of Fig. 10b in simplified form. Phases B, C, D can be parallelized in three stages. For the partial machines, the index calculation can be dine in three steps, including a reset after reaching n. Phases E and F can be parallel to phase A. Again, parallelizable states are covered by an ellipse symbol. The inner ellipses 107 describe three stages $B_i$ to $D_i$ being combinable at lower level, respectively, and having shifted indices, respectively. During the combination, the state transitions merge. The transition being indicated by a line 109 is connected with an increase of the index i:=(i+3)mod n. The states A, F, E can be carried out, on a higher level, parallel to the partial machine together with the merges states 107. This layer of parallel working is described in symbolic form by the outer ellipse 108.

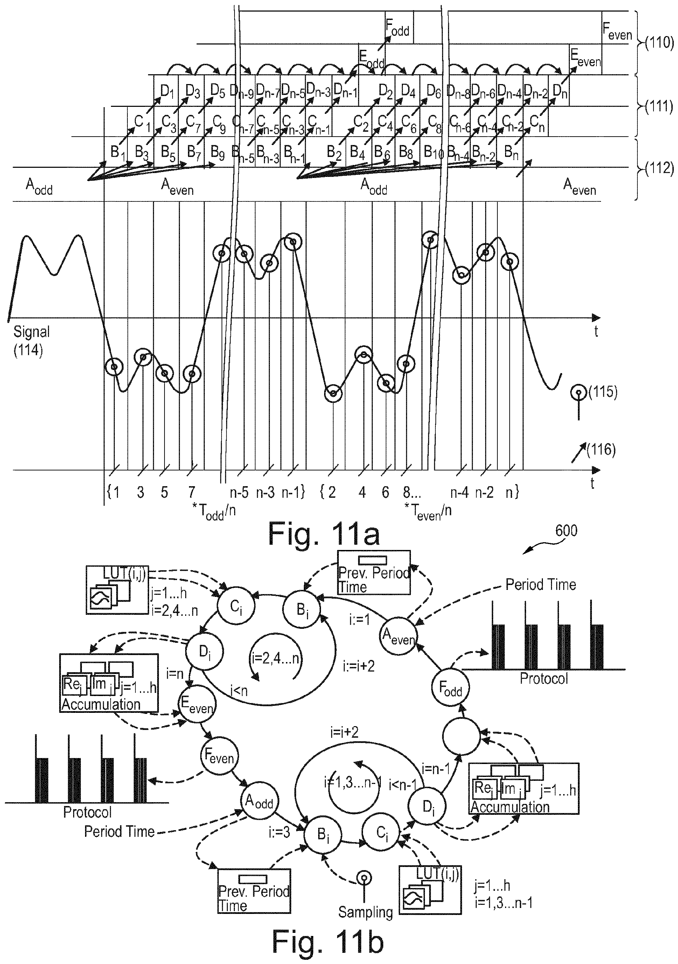

**Fig. 11a** illustrates a further example of the method in schematic form. Steps A to F are shown as successive, parallel phases 73. The phases comprises the functions of sensing 112, complex multiplication and accumulation 111 and evaluation and output 110. The sampling symbol 115 and forwarding of values 116 is shown. The process is similar to the previous figures. In contrast to the previous figure, sampling of the signal 114 is performed not only in one signal period. Only a subset of the needed sampling values is taken in one signal period. Further subsets of the needed sampling values are taken from other signal periods. The figure shows a simple example of a partial sampling. Two successive signal periods are used for signal reception. In the encoder periods, sampling values having odd indices and then sampling values having even indices are sampled and processed according to a pipeline principle, respectively.

**Fig. 11b** illustrates a further example of the process of the phases of the method according to Fig. 11a in schematic form. The example is again a state diagram of a partial machine for a circuitry-wise implementation. The symbolic representation follows the previous representation. In contrast to the previous representation, two index loops are traversed, one loop for sampling values having even indices and one loop for sampling values having odd indices, respectively.

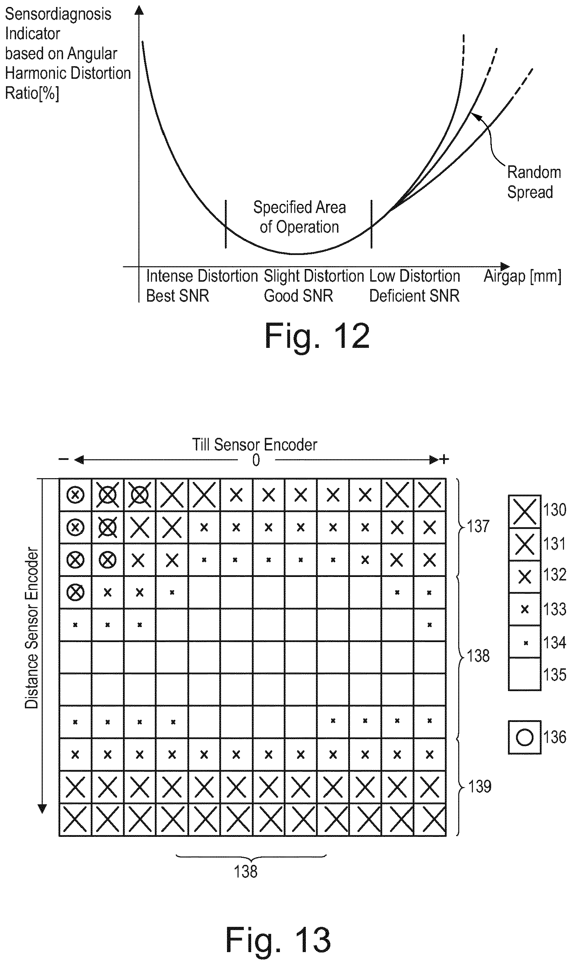

**Fig. 12** illustrates results of the inventive method and system in schematic form. The airgap is shown on the abscissa and the result value of the evaluation is shown on the ordinate. The result value is the indicator value of the diagnosis and is indicated here as component of the angular-related harmonics distortions (angular harmonic distortion ratio). When having a small airgap, the result value is high. This value comes from a significant signal distortion. There is a very good signal to noise ratio SNR. If the installation position satisfies an airgap in the specified area of operation, then there is a low distortion and a sufficiently good SNR. This region is shown in the result by a small value. When having a huge airgap, the result value is high. This value results from a small distortion and a bad SNR. The high noise component corresponds to components which cannot be associated with the first harmonic, i.e., the encoder order. The results are qualitatively similar for the method variations, they vary in the quantitative results for instance due to the number of included harmonics. The number of used sampling values and encoder periods for a calculated result provides influence to the statistic distribution of the indicator value (random spread), in particular when having high noise influence or having an encoder running out of true with a signal form varying greatly. The diagram shows that the inventive method provides a good indicator for a correct airgap.

**Fig. 13** also illustrates results of the inventive method in schematic form. The representation goes beyond the diagram of Fig. 12. It is shown a characteristic diagram of the results over the tilting between encoder and sensor (tilt sensor encoder) in one dimension and the distance between sensor and encoder in the other dimension.

The result value is shown in the size of the diagonal crosses 130-135. The result value ranges from high values 130 to very low values 135. The central marked region of both axes 138 corresponds to the advantageous installation position. If there is in addition a greater tilting in the region of small distance between encoder and sensor 137, then there is a great signal distortion. In the region of greater distance 139, the result value detects the noise for a faint signal. The representation shows that the inventive method provides also a good indicator in view of the tilting. The corresponding signal influence can be detected. If the operating point of the system lies in the allowed installation position, this is shown by a very small result value. A deviation from the allowed installation position may be detected by a high result value.

The labeling with a circle 136 is done for especially critical regions. The sensor system delivers, after the signal evaluating ASIC as sensor signal processing unit (also called herein sensor control unit), wrongly the double rotational speed of the encoder as digital information to the electronic control unit (so called frequency doubling). Here, the signal is strongly distorted, similar to the example as shown in Fig. 5d. The spectral component of the second harmonic dominates, similar to the example as shown in Fig. Sf. In a corresponding development of the method, also the component of the first harmonic and the component of the second component may be calculated analogously. With this, also the case of frequency doubling may be detected.

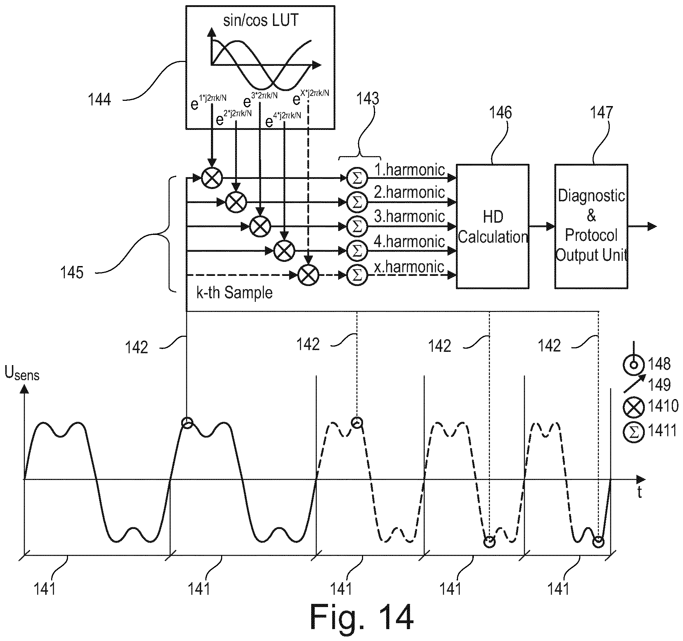

**Fig. 14** shows a further example of the method in schematic form. In the first step 131, the duration of a signal period is measured. From this, the sampling point of time 142 for the next period is determined. In the subsequent signal periods, the duration of a period 141 is measured continuously, for calculating the sampling point of time 142 for the following period. This process is repeated for N periods. The symbol 148 represents the sampling process. The sampling value with index k (k=1...N) is supplied to a multiply-add unit 143 and 145. The symbol 1410 symbolizes the multiplication and symbol 1411 symbolizes the adding accumulation. The arrow 149 symbolizes the forwarding of the values. In the multiply-add unit, the k-th sampling values are multiplied with sine/cosine functions or a complex exponential function from a lookup table 144 and adding accumulated. For X harmonics in use, X different lookup tables and multiply-add units may be needed. After the adding accumulation of at least N values, the harmonic distortion may be determined by using the function block 146. In the Figure, the function blocks correspond to the steps A to F as described above. Steps A are marked by reference signs 141. Steps B are marked by reference signs 142. Steps C and D are marked by reference signs 143, 144 and 145. Step E corresponds to the function block having the reference sign 146. Step F is marked by the reference sign 147.

It should be noted that the term "comprising" does not exclude other elements or features and the "a" or "an" does not exclude a plurality. Also elements described in association with different embodiments may be combined.

It should also be noted that reference signs in the claims shall not be construed as limiting the scope of the claims.

## Claims

**1.** A magnetic sensor arrangement for determining an operating state of a magnetic sensor, the magnetic sensor arrangement comprising

a magnetic sensor being adapted to provide an output voltage being modulated by a movement of an encoder component, the encoder component providing a periodic changing magnetic field being generated due to a relative movement of the encoder component in relation to the magnetic sensor arrangement, and

a sensor control unit being coupled to the magnetic sensor and comprising a comparator for sensing the encoder period based on the sensor output voltage and a counter for counting the duration of the encoder period, the sensor control unit being adapted

to receive the output voltage signal of the magnetic sensor, wherein the output voltage signal is a function of time, to determine a momentary value of the duration of the encoder period based on an output signal of the counter and based on the output voltage signal;

to determine at least one point of sampling based on the determined momentary value of the duration of the encoder period and to sample the output voltage signal to the at least one determined point of sampling, to change the reference quantity from time to rotational angle by mapping the output voltage signal to a converted signal being a function of rotational angle such that spectral signal power portions of the converted signal are associated with orders of the encoder rotational speed, to determine a first signal power being indicative for a first portion of orders of the encoder rotational speed, to determine a second signal power being indicative for a second portion of orders of the encoder rotational speed, wherein determining the first signal power and the second signal power comprises multiplying the sampling values with complex harmonic coefficients, and accumulating the multiplied values for a selected time period, to determine a ratio of the first signal power and the second signal power, the ratio being indicative for a signal distortion of the output voltage signal, and to determine the operating state of the magnetic sensor based on the determined ratio, wherein determining the ratio of the first signal power and the second signal power corresponds to determining a ratio of subtotals of the results of the accumulation.

2. The magnetic sensor arrangement according to claim 1, wherein the encoder orders of the first portion of orders of the encoder rotational speed correspond to an order of the encoder rotational speed having an encoder order number corresponding to the encoder division.

3. The magnetic sensor arrangement according to claim 2, wherein the encoder orders of the second portion of orders of the encoder rotational speed correspond to predefined multiple of the encoder order having an encoder order number corresponding to the encoder division or wherein the encoder orders of the second portion of orders of the encoder rotational speed correspond to all encoder orders.

4. The magnetic sensor arrangement according to claim 1, wherein the first signal power corresponds to the overall signal power reduced by the signal power of the encoder order, and wherein the second signal power corresponds the overall signal power.

5. The magnetic sensor arrangement according to claim 1, wherein the sampling is performed equidistantly in the reference quantity of the rotation angle of the encoder.

6. The magnetic sensor arrangement according to claim 1, wherein the sensor control unit is adapted to transmit the determined operating state to a superior system control unit.

7. The magnetic sensor arrangement according to claim 1, wherein the sensor control unit is integrated as circuit part of the sensor and/or is adapted to operate as a finite state machine.

8. A sensor system, the sensor system comprising a magnetic sensor arrangement (100) according to claim 1 and an encoder component.

9. Method of determining an operating state of a magnetic sensor, the method comprising receiving an output voltage signal of a magnetic sensor, the magnetic sensor being adapted to provide an output voltage being modulated by a movement of an encoder component, the encoder component providing a periodic changing magnetic field being generated due to a relative movement of the encoder component in relation to the magnetic sensor arrangement, wherein the output voltage signal is a function of time, counting the duration of the encoder period and determining a momentary value of the duration of the encoder period based on an output signal of the counter and based on the output voltage signal; and determining at least one point of sampling based on the determined momentary value of the duration of the encoder period and sampling the output voltage signal to the at least one determined point of sampling; changing the reference quantity from time to rotational angle by mapping the output voltage signal to a converted signal being a function of rotational angle such that spectral signal power portions of the converted signal are associated with orders of the encoder rotational speed, determining a first signal power being indicative for a first portion of orders of the encoder rotational speed, determining a second signal power being indicative for a second portion of orders of the encoder rotational speed, wherein determining the first signal power and the second signal power comprises multiplying the sampling values with complex harmonic coefficients, and accumulating the multiplied values for a selected time period.

determining a ratio of the first signal power and the second signal power, the ratio being indicative for a signal distortion of the output voltage signal wherein determining the ratio of the first signal power and the second signal power corresponds to determining a ratio of subtotals of the results of the accumulation, and
determining the operating state of the magnetic sensor based on the determined ratio.

10. A program element of determining an operating state of a magnetic sensor, which program element, when being executed by a processor, is adapted to carry out or control a method according to claim 9.


**Patentansprüche**

1. Eine Magnetsensor Anordnung zum Bestimmen eines Betriebszustands eines Magnetsensors, wobei die Magnetsensor Anordnung aufweist

einen Magnetsensor, welcher eingerichtet ist zum Bereitstellen einer Ausgangsspannung, die mittels einer Bewegung einer Encoder Komponente moduliert wird, wobei die Encoder Komponente ein sich periodisch änderndes Magnetfeld bereitstellt, welches aufgrund einer relativen Bewegung der Encoder Komponente in Bezug auf die Magnetsensor Anordnung erzeugt wird, und
eine Sensorsteuereinheit, welche mit dem Magnetsensor gekoppelt ist und einen Komparator aufweist zum Abtasten der Encoderperiode basierend auf der Sensor Ausgangsspannung und einem Zähler zum Zählen der Dauer der Encoderperiode, wobei die Sensorsteuereinheit eingerichtet ist
zum Empfangen des Ausgangsspannungssignals des Magnetsensors, wobei das Ausgangsspannungssignal eine Funktion der Zeit ist,
zum Bestimmen eines momentanen Werts der Dauer der Encoderperiode basierend auf einem Ausgangssignal des Zählers und basierend auf dem Ausgangsspannungssignal;
zum Bestimmen von zumindest einem Punkt des Abtastens basierend auf dem vorbestimmten momentanen Wert der Dauer der Encoderperiode und zum Abtasten des Ausgangsspannungssignals zu dem zumindest einen bestimmten Punkt des Abtastens,
zum Ändern der Referenzquantität von Zeit zu Rotationswinkel mittels Abbildens des Ausgangsspannungssignals zu einem konvertierten Signal, welches eine Funktion des Rotationswinkels ist, so dass spektrale Signalleistungsteile des konvertierten Signals mit Ordnungen der Encoder Rotationsgeschwindigkeit verknüpft werden,
zum Bestimmen einer ersten Signalleistung, welche indikativ ist für einen ersten Teil von Ordnungen der Encoder Rotationsgeschwindigkeit,
zum Bestimmen einer zweiten Signalleistung, welche indikativ ist für einen zweiten Teil von Ordnungen der Encoder Rotationsgeschwindigkeit, wobei das Bestimmen der ersten Signalleistung und der zweiten Signalleistung ein Multiplizieren der Abtastwerte mit komplexen harmonischen Koeffizienten und ein Akkumulieren der multiplizierten Werte für eine ausgewählte Zeitperiode aufweist,
zum Bestimmen eines Verhältnisses der ersten Signalleistung und der zweiten Signalleistung, wobei das Verhältnis indikativ ist für eine Signalverzerrung des Ausgangsspannungssignals, und
zum Bestimmen des Betriebszustands des Magnetsensors basierend auf dem bestimmten Verhältnis, wobei das Bestimmen des Verhältnisses der ersten Signalleistung und der zweiten Signalleistung korrespondiert zu einem Bestimmen eines Verhältnisses von Teilsummen der Ergebnisse der Akkumulation.

2. Die Magnetsensor Anordnung gemäß Anspruch 1,

wobei die Encoder Ordnungen des ersten Teils von Ordnungen der Encoder Rotationsgeschwindigkeit zu einer Ordnung der Encoder Rotationsgeschwindigkeit korrespondieren, welche eine Encoder Ordnungszahl hat, welche zu der Encoder Teilung korrespondiert.

3. Die Magnetsensor Anordnung gemäß Anspruch 2,

wobei die Encoder Ordnungen des zweiten Teils von Ordnungen der Encoder Rotationsgeschwindigkeit zu einem vordefinierten Mehrfachen der Encoder Ordnung korrespondieren, welche eine Encoder Ordnungszahl hat, welche zu der Encoder Teilung korrespondiert, oder
wobei die Encoder Ordnungen des zweiten Teils von Ordnungen der Encoder Rotationsgeschwindigkeit zu allen Encoder Ordnungen korrespondieren.

**4.** Die Magnetsensor Anordnung gemäß Anspruch 1,

wobei die erste Signalleistung zu der gesamten Signalleistung korrespondiert, welche um die Signalleistung der Encoder Ordnung reduziert ist, und
wobei die zweite Signalleistung zu der gesamten Signalleistung korrespondiert.

**5.** Die Magnetsensor Anordnung gemäß Anspruch 1,

wobei das Abtasten äquidistant in der Referenzquantität des Rotationswinkels des Encoders durchgeführt wird.

**6.** Die Magnetsensor Anordnung gemäß Anspruch 1,

wobei die Sensorsteuereinheit eingerichtet ist zum Übertragen des bestimmten Betriebszustands zu einer übergeordneten Systemsteuereinheit.

**7.** Die Magnetsensor Anordnung gemäß Anspruch 1,

wobei die Sensorsteuereinheit als ein Schaltkreisteil des Sensors integriert ist und/oder eingerichtet ist zum Arbeiten als eine endliche Zustandsmaschine.

**8.** Ein Sensorsystem, wobei das Sensorsystem eine Magnetsensor Anordnung (100) gemäß Anspruch 1 und eine Encoder Komponente aufweist.

**9.** Ein Verfahren zum Bestimmen eines Betriebszustands eines Magnetsensors, wobei das Verfahren aufweist

Empfangen eines Ausgangsspannungssignals eines Magnetsensors, wobei der Magnetsensor eingerichtet ist zum Bereitstellen einer Ausgangsspannung, welche mittels einer Bewegung einer Encoder Komponente moduliert wird, wobei die Encoder Komponente ein sich periodisch änderndes Magnetfeld bereitstellt, welches aufgrund einer relativen Bewegung der Encoder Komponente in Bezug auf die Magnetsensor Anordnung erzeugt wird, wobei das Ausgangsspannungssignal eine Funktion der Zeit ist,
Zählen der Dauer der Encoderperiode und Bestimmen eines momentanen Werts der Dauer der Encoderperiode basierend auf einem Ausgangssignal des Zählers und basierend auf dem Ausgangsspannungssignal; und
Bestimmen von zumindest einem Punkt des Abtastens basierend auf dem vorbestimmten momentanen Wert der Dauer der Encoderperiode und zum Abtasten des Ausgangsspannungssignals zu dem zumindest einen vorbestimmten Punkt des Abtastens;
Ändern der Referenzquantität von Zeit zu Rotationswinkel mittels Abbildens des Ausgangsspannungssignals zu einem konvertierten Signal, welches eine Funktion des Rotationswinkels ist, so dass spektrale Signalleistungsteile des konvertierten Signals mit Ordnungen der Encoder Rotationsgeschwindigkeit verknüpft sind,
Bestimmen einer ersten Signalleistung, welche indikativ ist für einen ersten Teil von Ordnungen der Encoder Rotationsgeschwindigkeit,
Bestimmen einer zweiten Signalleistung, welche indikativ ist für einen zweiten Teil von Ordnungen der Encoder Rotationsgeschwindigkeit, wobei das Bestimmen der ersten Signalleistung und der zweiten Signalleistung ein Multiplizieren der Abtastwerte mit komplexen harmonischen Koeffizienten und ein Akkumulieren der multiplizierten Werte für eine ausgewählte Zeitperiode aufweist,
Bestimmen eines Verhältnisses der ersten Signalleistung und der zweiten Signalleistung, wobei das Verhältnis indikativ ist für eine Signalverzerrung des Ausgangsspannungssignals, wobei das Bestimmen des Verhältnisses der ersten Signalleistung und der zweiten Signalleistung korrespondiert zu einem Bestimmen eines Verhältnisses von Teilsummen des Ergebnisses der Akkumulation, und
Bestimmen des Betriebszustands des Magnetsensors basierend auf dem bestimmten Verhältnis.

**10.** Ein Programmelement zum Bestimmen eines Betriebszustands eines Magnetsensors, welches Programmelement, wenn es mittels eines Prozessors ausgeführt wird, eingerichtet ist zum Ausführen oder Steuern eines Verfahrens gemäß Anspruch 9.

**Revendications**

**1.** Agencement de capteur magnétique servant à déterminer un état de fonctionnement d'un capteur magnétique, l'agencement de capteur magnétique comprenant

un capteur magnétique adapté à fournir une tension de sortie modulée par un mouvement d'un composant codeur, le composant codeur fournissant un champ magnétique à variation périodique généré suite à un mouvement relatif du composant codeur par rapport à l'agencement de capteur magnétique, et

une unité de commande de capteur couplée au capteur magnétique et comprenant un comparateur servant à détecter la période de codeur sur la base de la tension de sortie du capteur et un compteur servant à compter la durée de la période de codeur, l'unité de commande de codeur étant adaptée à

recevoir le signal de tension de sortie du capteur magnétique, le signal de tension de sortie étant fonction du temps, déterminer une valeur instantanée de la durée de la période de codeur sur la base d'un signal de sortie du compteur et sur la base du signal de tension de sortie ;

déterminer au moins un point d'échantillonnage sur la base de la valeur instantanée déterminée de la durée de la période de codeur et échantillonner le signal de tension de sortie à l'au moins un point d'échantillonnage déterminé, changer la grandeur de référence du temps à un angle de rotation en faisant correspondre le signal de tension de sortie avec un signal converti fonction d'un angle de rotation de sorte à associer des parties de puissance de signal spectrale du signal converti à des ordres de la vitesse de rotation de codeur,

déterminer une première puissance de signal indiquant une première partie d'ordres de la vitesse de rotation de codeur,

déterminer une deuxième puissance de signal indiquant une deuxième partie d'ordres de la vitesse de rotation de codeur, la détermination de la première puissance de signal et de la deuxième puissance de signal comprenant la multiplication des valeurs d'échantillonnage par des coefficients harmoniques complexes et le cumul des valeurs multipliées sur une période de temps sélectionnée,

déterminer un rapport de la première puissance de signal et de la deuxième puissance de signal, et

déterminer l'état de fonctionnement du capteur magnétique sur la base du rapport déterminé, la détermination du rapport de la première puissance de signal et de la deuxième puissance de signal correspondant à la détermination d'un rapport de sous-totaux des résultats du cumul.

2. Agencement de capteur magnétique selon la revendication 1,
   dans lequel les ordres de codeur de la première partie d'ordres de la vitesse de rotation de codeur correspondent à un ordre de la vitesse de rotation de codeur possédant un numéro d'ordre de codeur qui correspond à la division de codeur.

3. Agencement de capteur magnétique selon la revendication 2,
   dans lequel les ordres de codeur de la deuxième partie d'ordres de la vitesse de rotation de codeur correspondent à un multiple prédéfini de l'ordre de codeur possédant un numéro d'ordre de codeur qui correspond à la division de codeur, ou
   dans lequel les ordres de codeur de la deuxième partie d'ordres de la vitesse de rotation de codeur correspondent à tous les ordres de codeur.

4. Agencement de capteur magnétique selon la revendication 1,
   dans lequel la première puissance de signal correspond à la puissance de signal globale minorée de la puissance de signal de l'ordre de codeur, et
   dans lequel la deuxième puissance de signal correspond à la puissance de signal globale.

5. Agencement de capteur magnétique selon la revendication 1,
   dans lequel l'échantillonnage s'effectue de façon équidistante dans la grandeur de référence de l'angle de rotation du codeur.

6. Agencement de capteur magnétique selon la revendication 1,
   dans lequel l'unité de commande de capteur est adaptée à transmettre l'état de fonctionnement déterminé à une unité de commande de système supérieure.

7. Agencement de capteur magnétique selon la revendication 1,
   dans lequel l'unité de commande de capteur fait partie intégrante du circuit du capteur et/ou est adaptée à fonctionner comme un automate à états finis.

8. Système de capteur, le système de capteur comprenant un agencement (100) de capteur magnétique selon la revendication 1 et un composant codeur.

**9.** Procédé de détermination d'un état de fonctionnement d'un capteur magnétique, le procédé comprenant la réception d'un signal de tension de sortie d'un capteur magnétique, le capteur magnétique étant adapté à fournir une tension de sortie modulée par un mouvement d'un composant codeur, le composant codeur fournissant un champ magnétique à variation périodique généré suite à un mouvement relatif du composant codeur par rapport à l'agencement de capteur magnétique, le signal de tension de sortie étant fonction du temps,

le comptage de la durée de la période de codeur et la détermination d'une valeur instantanée de la durée de la période de codeur sur la base d'un signal de sortie du compteur et sur la base du signal de tension de sortie ; et la détermination d'au moins un point d'échantillonnage sur la base de la valeur instantanée déterminée de la durée de la période de codeur et l'échantillonnage du signal de tension de sortie à l'au moins un point d'échantillonnage déterminé ;

le changement de la grandeur de référence du temps à un angle de rotation en faisant correspondre le signal de tension de sortie avec un signal converti fonction d'un angle de rotation de sorte à associer des parties de puissance de signal spectrale du signal converti à des ordres de la vitesse de rotation de codeur,

la détermination d'une première puissance de signal indiquant une première partie d'ordres de la vitesse de rotation de codeur,

la détermination d'une deuxième puissance de signal indiquant une deuxième partie d'ordres de la vitesse de rotation de codeur, la détermination de la première puissance de signal et de la deuxième puissance de signal comprenant la multiplication des valeurs d'échantillonnage par des coefficients harmoniques complexes et le cumul des valeurs multipliées sur une période de temps sélectionnée,

la détermination d'un rapport de la première puissance de signal et de la deuxième puissance de signal, le rapport indiquant une distorsion de signal du signal de tension de sortie, la détermination du rapport de la première puissance de signal et de la deuxième puissance de signal correspondant à la détermination d'un rapport de sous-totaux des résultats du cumul, et

la détermination de l'état de fonctionnement du capteur magnétique sur la base du rapport déterminé.

**10.** Elément de programme de détermination d'un état de fonctionnement d'un capteur magnétique, lequel élément de programme, une fois exécuté par un processeur, est adapté à mettre en oeuvre ou piloter un procédé selon la revendication 9.

Fig. 1

Fig. 2

Fig. 3

Fig. 4

signal at small airgap

Fig. 5a

magnitude spectrum

$\dfrac{1}{T}$ $\dfrac{1}{2T}$ $\dfrac{1}{3T}$ $\dfrac{1}{4T}$ $\dfrac{1}{5T}$ frequency

Fig. 5b

signal at normal airgap

Fig. 5c

magnitude spectrum

$\dfrac{1}{T}$ $\dfrac{1}{2T}$ $\dfrac{1}{3T}$ $\dfrac{1}{4T}$ $\dfrac{1}{5T}$ frequency

Fig. 5d

signal at small airgap with tilt

Fig. 5e

magnitude spectrum

$\dfrac{1}{1}$ $\dfrac{1}{2T}$ $\dfrac{1}{3T}$ $\dfrac{1}{4T}$ $\dfrac{1}{5T}$ frequency

Fig. 5f

Fig. 6a

Fig. 6b

(70)  (71)  (70)  (71)  (70)  (71)  (70)  (71)  (72)

Phases (73)

| $A_1$ | $B_1$ | $C_1$ | $D_1$ | $A_2$ | $B_2$ | $C_2$ | $D_2$ | $A_3$ | $B_3$ | $C_3$ | $D_3$ | | $A_n$ | $B_n$ | $C_n$ | $D_n$ | E | F | $A_1$.... |

Signal (74)

$T_1$   $1*T_1/n$   $T_2$   $2*T_2/n$   $T_3$   $3*T_3/n$   $T_n$   $n*T_n/n$

Sample 1 (76)   Sample 2 (77)   Sample 3 (78)   Sample n (79)

(75)

## Fig. 7a

Protocol

F

E

$Re_j$   $Im_j$   $j=1....h$

Accumulation

i:=1

i:=i+1

i==n

i=1....n

i<n

$A_j$

$B_i$   $C_i$

$D_j$

Period Time

Sampling

LUT (i,j)

$j=1....h$
$i=1....n$

## Fig. 7b

Fig. 8a

Fig. 8b

Fig. 9a

Fig. 9b

Fig. 9c

$$X_i^y = X_{(i+y) \bmod n}$$

Signal(104)

Fig. 10a

Fig. 10b

Fig. 10c

Fig. 11a

Fig. 11b

Sensordiagnosis
Indicator
based on Angular
Harmonic Distortion
Ratio[%]

Specified Area
of Operation

Random
Spread

| Intense Distortion | Slight Distortion | Low Distortion | Airgap [mm] |
| Best SNR | Good SNR | Deficient SNR | |

# Fig. 12

Till Sensor Encoder

# Fig. 13

Fig. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 19650935 A1
- DE 102006036270 A1
- US 2012032669 A1
- US 2004186680 A1
- EP 0323696 A2

### Non-patent literature cited in the description

- Magnetoresitive Sensors, Chap. 9 in Sensors - A Comprehensive Survey. **DIBBERN, U.** Magnetic Sensors. VCH, 1989, vol. 5